Europäisches Patentamt

European Patent Office

Office européen des brevets

(11) Publication number: **0 487 901 A2**

# EUROPEAN PATENT APPLICATION

(21) Application number: **91118091.7**

(51) Int. Cl.5: **G06F 3/06**

(22) Date of filing: **23.10.91**

(30) Priority: **29.11.90 US 621115**

(43) Date of publication of application:
**03.06.92 Bulletin 92/23**

(84) Designated Contracting States:
**DE FR GB IT**

(71) Applicant: **Hewlett-Packard Company**
**3000 Hanover Street**
**Palo Alto, California 94304(US)**

(72) Inventor: **Lang, Robert J.**
**2339 Spring Mountain Drive**
**Boise, Idaho 83702(US)**
Inventor: **Mankin, Robb**
**2177 Fastwater Avenue**
**Boise, Idaho 83704(US)**

(74) Representative: **Baillie, Iain Cameron**
**c/o Ladas & Parry, Altheimer Eck 2**
**W-8000 München 2(DE)**

(54) **Disk controller using a video ram.**

(57) A disk controller is described with an improved buffer interface between a host processor and a disk drive. The disk controller includes a buffer memory (34) having at least two ports (37, 40), each port capable of bi-directional data transfers to and from the buffer memory. A first data bus (42) is connected to one such port (40) and a second data bus (38) is connected to a second such port (37). A controller (18) operates the buffer memory so that data transfers occur to and from the buffer memory simultaneously over the first and second data busses (42, 38). This thereby enables more efficient data transfers to occur between the host processor and disk drive.

FIG. 3

## FIELD OF THE INVENTION

This invention relates to disk memory control apparatus, and more particularly, to a disk controller that enables more efficient data transfers between a host processor and a disk memory.

## BACKGROUND OF THE INVENTION

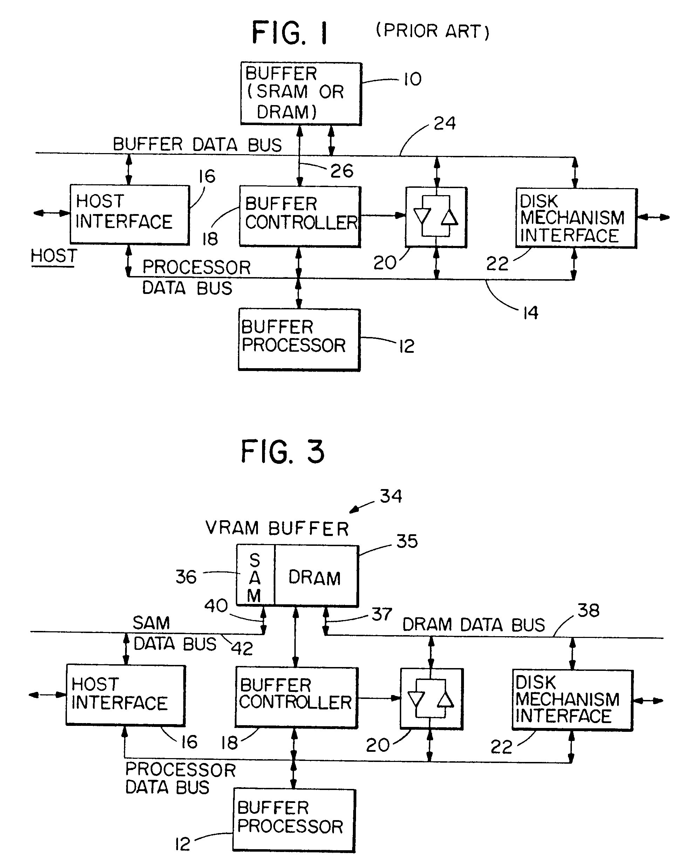

Conventional disk memory controllers employ a buffer memory that is either implemented as a single-port, serial, random access memory (SRAM) or a single-port, dynamic, random access memory (DRAM). The buffer memory is connected via a bus to both input and output interface modules. Such a disk controller is shown in FIG. 1 at the block diagram level. A buffer memory, 10 may be configured as either an SRAM or DRAM. The choice of a SRAM or DRAM buffer memory tends, to a large extent, to depend upon cost, required buffer bandwidth and desired application.

The operation of the disk controller is supervised by a dedicated buffer processor 12. A processor data bus 14 provides data access between buffer processor 12 and a host interface module 16, a buffer controller 18, a switch 20 and a disk mechanism interface 22. A buffer data bus 24 provides for data communication between host interface module 16 and buffer 10, and between buffer 10 and disk mechanism interface module 22. Switch 20 is also connected to buffer data bus 24 and provides for intercommunication between busses 14 and 24. Buffer controller 18, on the other hand, provides control and address signals via line 26 to buffer 10.

The main function of buffer controller 18 is to arbitrate accesses to buffer 10 from external sources. Host interface module 16 provides a buffering function for data transfers between a host processor and buffer 10, whereas disk mechanism interface 22 provides a similar function between buffer 10 and a disk drive. All data transfers between buffer 10, host interface 16 and disk mechanism interface 22 occur over buffer data bus 24. Thus, when a data transfer is occurring between buffer 10 and disk mechanism interface 22, no data transfers can occur between host interface 16 and buffer 10 (and vice-versa). As a result, buffer data bus 24 is a bottle-neck in the system and results in a substantial constriction on data transfers which can occur between the host processor and disk drive.

Recently, a new type of DRAM has become available on the market for video applications. Such DRAMS are called multi-port video RAM's (VRAM's) and include a DRAM portion (i.e., 262,144 words x 4 bits) and a serial access memory (SAM) portion (i.e., 512 words x 4 bits). Such memories have dual ports that enable simultaneous access to both the DRAM and SAM. They furthermore have the ability to bi-directionally transfer data internally between the DRAM and a serial data register within the SAM. Memory accesses can occur simultaneously to and from the DRAM and to and from the SAM, except when data transfers are taking place internally between the DRAM and SAM. In certain cases, SAM data transfers can even continue when an internal data transfer is in process, but only from a portion of the SAM not involved in the internal transfer. One such VRAM is the TMS 44C251, 262,144 by 4-bit, multi-port, video RAM from the Texas Instruments Corporation, Houston, Texas. A similarly functioning VRAM is available from Toshiba MOS Memory Products of Tokyo, Japan, and is denoted as the TC524256P/Z/J-10.

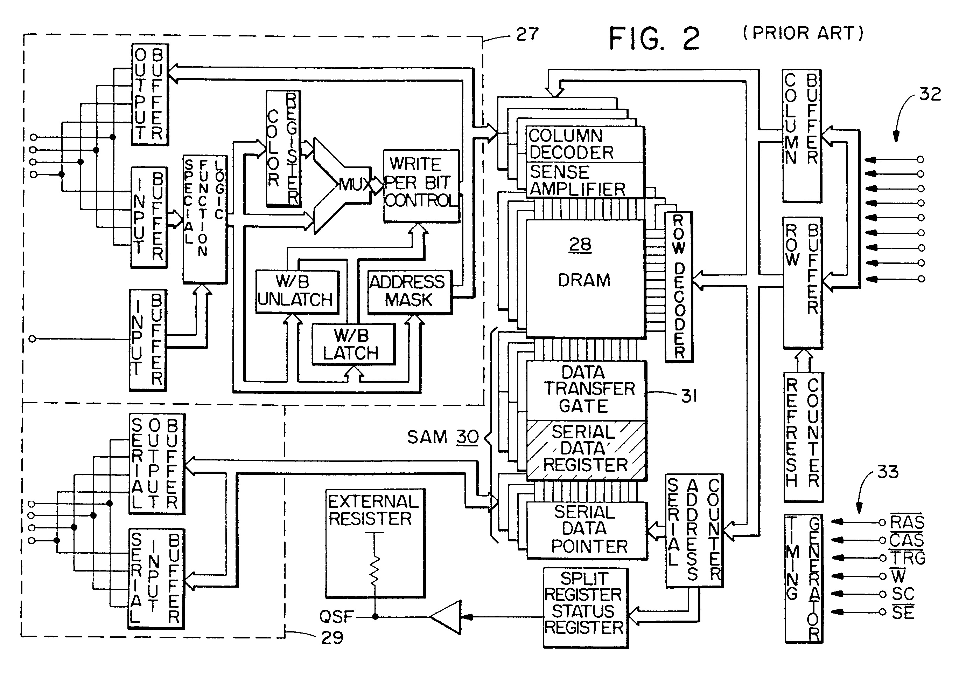

Fig. 2 illustrates a block diagram of the Texas Instruments VRAM. Input/Output buffer section 27 provides independent access to and from DRAM 28. Input/Output buffer section 29 provides independent access to and from SAM 30. Data transfers between DRAM 28 and SAM 30 occur through data transfer gate 31. Address and control signals to accomplish data transfers are applied via inputs 32 and 33 respectively. VRAMS, such as shown in Fig. 2, generally see use in graphics processors and associated control devices, but not with disk controllers.

It is an object of this invention to provide an improved disk controller having higher data throughputs between a host processor and a disk drive.

It is another object of this invention to provide a disk controller having improved buffer memory operation.

It is a further object of this invention to employ a VRAM in a disk controller to enable improved data transfers.

## SUMMARY OF THE INVENTION

A disk controller is described with an improved buffer interface between a host processor and a disk drive. The disk controller includes a buffer memory having at least two ports, each port capable of bi-directional data transfers to and from the buffer memory. A first data bus is connected to one such port and a second data bus is connected to a second such port. A controller operates the buffer memory so that data transfers occur to and from the buffer memory simultaneously over the first and second data busses. This thereby enables more efficient data transfers to occur between the host processor and disk drive.

## DESCRIPTION OF THE DRAWINGS

FIG. 1 is a block diagram of a prior art disk controller.

FIG. 2 is a block diagram of a prior art VRAM.

FIG. 3 is a block diagram of a disk controller that includes the invention hereof.

## DETAILED DESCRIPTION OF THE INVENTION

In FIG 3, like modules to those shown in FIG. 1 are numbered identically. It is to be noted that the buffer memory now comprises a video RAM (VRAM) buffer 34 that includes a DRAM 35 and SAM 36. VRAM 34 can be configured as shown in FIG. 2 or otherwise, so long as it has independent memory modules which are able to transfer data between themselves, and is additionally able to support independent external accesses to connected independent busses.

A DRAM port 37 communicates with a DRAM data bus 38 while a SAM port 40 communicates with a SAM data bus 42. As aforestated, VRAM 34 supports bi-directional data transfers, simultaneously, in and out of ports 37 and 40. Data transfers are enabled between DRAM 35 and SAM 36, bi-directionally, under control of buffer controller 18. When such data transfers are occurring, in general, no data transfers take place from ports 37 or 40. The one exception is when a "split transfer" occurs internally between SAM 36 and DRAM 35. In such case, only one portion of a SAM row is caused to transfer. The other portion of the SAM row remains accessible from SAM port 40. Dram port 37 is not accessible from the outside in such a split transfer.

All data transfers to and from the host interface module 16 pass through SAM port 40 and are serial in nature. Transfer of data between SAM 36 and DRAM 35 occur by rows, internal to the VRAM. All other buffer data transfers are through DRAM port 37.

Buffer controller 18 arbitrates all access requests to DRAM port 37 and performs SAM/DRAM data transfers, when required by SAM data movement. Buffer processor 12 performs the overall system control within the disk controller and assures that host interface module 16, buffer controller 18 and disk mechanism interface 22 operate in an interdependent and non-conflicting manner.

A data write to the disk drive through VRAM buffer 34 will now be described. Buffer controller 18 places SAM port 40 into an input mode. It then transfers the row of data from host interface module 16 into SAM 36 that contains the starting address within DRAM 35. A serial pointer is set to a desired column address for the first data byte. Data is then clocked into SAM port 36 from host interface module 16 until the row in SAM 36 is full. Buffer controller 18 then transfers the row of data from SAM 36 into the correct row in DRAM 35 and sets a serial pointer to the first column for the next row. Data is then clocked into SAM 36 until the row is full, and the row is then transferred to DRAM 35.

The above process is repeated until the data transfer from host interface module 16 is complete, at which time the final row is transferred from SAM 36 to DRAM 35 to complete a direct memory access transfer into VRAM buffer 34. Data may then be moved from VRAM buffer 34 to disk mechanism interface 22 through DRAM port 37. This is done as a regular DRAM-type access and may be accomplished in a page mode. Of course, such a data transfer may also be commenced prior to all data being "in place" within DRAM 35. These transfers continue until the entire data transfer is completed.

Buffer processor 12 also has random access to VRAM buffer 34 via switch 20 through DRAM port 37. Refresh cycles and SAM/DRAM transfer commands occur as actions through DRAM port 37 as well. Buffer controller 18 arbitrates between a disk direct memory access, processor 12 accesses, SAM/DRAM transfer commands, and refresh cycles for DRAM 35. It is important to realize that access to DRAM and SAM ports 37 and 40 may occur simultaneously and independently.

A data read appears very much like a data write operation. The data to be transferred to the host processor is placed in VRAM buffer 34 through DRAM port 37. Buffer controller 18 places SAM port 40 into the output mode, transfers from DRAM 35 to SAM 36 a row containing the first byte of data to be sent to the host computer and sets a serial pointer to the column address for the first byte. Data is then clocked out of SAM 36 and sent to host interface module 16, until the row in SAM 36 is empty. The next row of data is then transferred from DRAM 35 to SAM 36 and the serial pointer is set to the first column. The data is then clocked out and sent to host interface module 16. The process repeats until the last byte is clocked out and sent to host interface module 16. As that point, an interface direct memory access transfer is complete. Once again, accesses may occur simultaneously and independently to VRAM buffer 34 through both the SAM and DRAM ports 40 and 37 respectively, except, generally, during SAM/DRAM transfers.

The use of a dual-port VRAM allows increased total buffer data transfer bandwidth by separating the host data transfers onto a different bus from remaining data transfers. Because data transfers can occur on both buses simultaneously, the RAM allows the use of a slower access time memory and/or a narrower buffer bus width, for a given total data transfer bandwidth, than a single port SRAM or DRAM buffer implementation.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

**Claims**

1. A disk controller for providing data transfers between a disk memory and a host processor, said disk controller exhibiting improved buffer memory data transfers, the combination comprising:

   buffer memory means (34) having at least two ports (37, 40), each said port capable of bi-directional data transfers to and from said buffer memory means;

   first bus means (42) connected to one said port (40) of said buffer memory means (34);

   second bus means (38) connected to a second said port (37) of said buffer memory means (34), said first and second bus means (42, 38) capable of independent and simultaneous operation; and

   control means (12, 18) for operating said buffer memory means so that data transfers occur to and from said buffer memory means (34) simultaneously over said first and second bus means.

2. The disk controller as claimed in Claim 1 wherein said buffer memory means comprises:

   a video random access memory (VRAM) (34) including DRAM (35) and SAM (36) portions, said VRAM (34) including means for transfer of data between said DRAM and SAM portions.

3. The disk controller as recited in Claim 2 wherein one said port (40) provides bi-directional access to said SAM and a second said port (37) provides bi-directional access to said DRAM (34).

4. The disk controller as claimed in Claims 2 or 3 wherein said control means comprises:

   a microprocessor (12); and

   a buffer controller (18), said buffer controller (18), under the control of said microprocessor (12), arbitrating data access requests to said buffer memory and enabling internal data transfers between said SAM (36) and DRAM (35) within said VRAM (34).

5. The disk controller as recited in Claim 4, wherein said buffer controller (18) provides control and address signals via direct interconnections with said VRAM (34).

6. The disk controller as claimed in any one of Claims 2 through 5 wherein said first bus means (42) is a data bus for enabling data flow between said VRAM (34) and a host interface module (16).

7. The disk controller as claimed in any one of Claims 2 through 6 wherein said second bus means (38) is a data bus for enabling data flow between said VRAM (34) and a disk mechanism interface module (22).

8. The disk controller as recited in any one of the preceding claims, comprising:

   host interface means (16) connected between said first bus means (42) and a host processor and disk interface means (22) connected between said disk memory and said second bus (38), both said interface means functioning to control access between said buffer memory means (34) and said host processor and disk memory respectively.

## FIG. 1    (PRIOR ART)

BUFFER
(SRAM OR
DRAM) — 10

BUFFER DATA BUS

24

26

HOST
INTERFACE — 16

HOST

18

BUFFER
CONTROLLER

20

22

DISK
MECHANISM
INTERFACE

PROCESSOR
DATA BUS

14

BUFFER
PROCESSOR — 12

## FIG. 3

34

VRAM BUFFER

35

36 — S A M

DRAM

40

37

SAM
DATA BUS ╲42

DRAM DATA BUS

38

HOST
INTERFACE

BUFFER
CONTROLLER

20

DISK
MECHANISM
INTERFACE

16    18

22

PROCESSOR
DATA BUS

BUFFER
PROCESSOR

12

FIG. 2 (PRIOR ART)

EP 0 487 901 A2